# EUROPÄISCHE PATENTSCHRIFT

(11) **EP 3 085 204 B1**
(45) Veröffentlichungstag und Bekanntmachung des Hinweises auf die Patenterteilung: **08.06.2022**
(21) Anmeldenummer: 14816224.1
(22) Anmeldetag: 17.12.2014
(51) Int. Cl.: H05B 47/175, H05B 47/105, H05B 47/19

(54) **BELEUCHTUNGSSYSTEM MIT AUTOMATISCHER LEUCHTENIDENTIFIZIERUNG ZUR ORTSABHÄNGIGEN LEUCHTENKONFIGURATION UND VERFAHREN ZUM BETRIEB EINES BELEUCHTUNGSSYSTEMS**
LIGHTINGSYSTEM WITH AUTOMATISATED LIGHTIDENTIFICATION FOR LIGHTKONFIGURATION DEPENDENT ON A POSITION AND METHOD FOR OPERATING A LIGHTINGSYSTEM
SYSTÈME D'ECLAIRAGE AVEC IDENTIFICATION AUTOMATIQUE DES LUMINAIRES POUR CONFIGURER LESDITS LUMINAIRES EN DÉPENDANCE DU LEUR POSITION ET PROCÉDÉ POUR OPÉRER UN TEL SYSTÈME

(30) Priorität: 18.12.2013 DE 102013226413
(43) Veröffentlichungstag der Anmeldung: 26.10.2016
(73) Patentinhaber: Zumtobel Lighting GmbH, 6850 Dornbirn (AT)
(72) Erfinder: JOPPI, Rene, A-6850 Dornbirn (AT); MAYR, Gregor, A-6974 Gaißau (AT)
(74) Vertreter: Kiwit, Benedikt
(86) Internationale Anmeldenummer: PCT/EP2014/078148
(87) Internationale Veröffentlichungsnummer: WO 2015/091604

(56) Entgegenhaltungen:
- WO-A1-2007/072314
- WO-A2-2008/104927
- DE-A1-102010 038 792
- DE-A1-102011 053 923
- DE-A1-102011 086 702
- DE-U1-202006 011 684
- KR-A- 20110 103 124
- US-A1- 2010 081 375
- US-A1- 2012 126 721
- Autoren ET AL: "Master of Advanced Studies in Human Computer Interaction Design iLiving Interaction Design für den Wohnraum der Zukunft", , 31. Dezember 2010 (2010-12-31), Seiten 1-85, XP055173729, Gefunden im Internet: URL:http://eprints.hsr.ch/69/1/iLiving_Ber icht.pdf [gefunden am 2015-03-04]

## Beschreibung

Die Erfindung betrifft ein Beleuchtungssystem und ein zugehöriges Verfahren zum Betrieb eines Beleuchtungssystems, welche eine automatische Identifizierung der Leuchten und eine Steuerung der Leuchten basierend auf Ihrer jeweiligen Position ermöglichen.

Beispielsweise im Bürobereich wird Licht meist im Bereich von Segmenten oder für den ganzen Raum angesteuert. Das bedeutet einen Effizienzverlust, da bspw. Büroarbeitsplätze beleuchtet werden, obwohl sie nicht besetzt sind, sowie eine Einschränkung in der Flexibilität, da bspw. derselbe Dimmwert, dieselbe Farbtemperatur, etc. für den ganzen Bereich einheitlich festgelegt wird, obwohl der Benutzer die Beleuchtung seines Arbeitsplatzes individuell einstellen möchte.

Auch der Ausstellungsbereich in Geschäften ist ein sehr aktiver, innovativer Bereich, in dem verschiedenste Konzepte umgesetzt werden. Dennoch wird Lichtmanagement in Geschäften noch kaum eingesetzt. Klassische Argumente wie Energieeinsparung/Dimmen sind bei Ladenbesitzern wenig relevant, da stets ein hohes Level an Beleuchtung vorhanden sein muss, weil erfahrungsgemäß "dunkel" von Kunden als "geschlossen" interpretiert wird.

Vielmehr geht es in Geschäften darum, die Ausstellungsstücke "ins richtige Licht zu rücken". Dabei sollen Farben und Farbtemperaturen flexibel einstellbar sein, um die wechselnden Kollektionen passend zu beleuchten und den Kunden an die gewünschten Exponate zu führen.

Hinzu kommt, dass in Geschäften, z.B. in Bekleidungsgeschäften, sich oft die Ausstellungsstücke ändern. Dabei sollen z.B. besondere Kollektionen oder Sonderangebote mit der Beleuchtung besonders hervorgehoben werden. Dies gestaltet sich gemäß der Konzepte des derzeitigen Standes der Technik mit stationären (Bedien-) Geräten schwierig. Beispielsweise muss der richtige Strahler an einem stationären (Bedien-) Gerät ausfindig gemacht werden. Die Strahler werden bspw. nur durch Nummern (Leuchtenadresse) identifiziert. In einem Shop befindet sich aber typischerweise eine große Anzahl von Strahlern. D.h. es dauert unter Umständen sehr lange, bis der richtige Strahler gefunden ist. Auch der Angestellte im Büro muss seine Leuchte erst auffinden.

Da der Strahler ferner am stationären (Bedien-)Gerät eingestellt wird, ist es dem Benutzer nicht möglich, die Wirkung des Lichts (Farbe/Farbtemperatur) unmittelbar am Exponat zu erleben. D.h. er muss immer zwischen Strahler und stationären (Bedien-)Gerät hin- und herlaufen, bis er die richtige Einstellung gefunden hat. Dasselbe gilt auch für den Arbeitsplatz im Bürobereich.

Es ist überdies ein Beleuchtungssystem bekannt, bei welchem jede einzelne Leuchte über ein WLAN-Modul verfügt, über welches die jeweilige Leuchte gesteuert werden kann. Bei diesem Beleuchtungssystem werden die mit WLAN-Modulen ausgestatteten Leuchten bspw. über die Signalstärke bzw. die Übertragungszeit des Wireless-Signals zwischen Leuchte und mobilem Bedienelement lokalisiert. Insbesondere ist eine Steuerung der Leuchten mittels eines ebenfalls über ein WLAN-Modul verfügendes mobiles Bediengerät möglich. Nachteilig hieran ist jedoch, dass jede Leuchte mit einem entsprechenden kostenaufwändigen WLAN-Modul ausgestattet sein muss und zudem aufgrund von Abschattungseffekten sowie der Übertragungsstärke (bspw. aufgrund von Leuchtengehäuse, Säulen, Decken, Exponaten, etc.) eine genaue Ermittlung der Positionierung der Leuchten wie auch eine Ansteuerung der Leuchten beeinträchtigt werden kann.

Das Dokument DE 10 2011 086702 A1 zeigt ein Beleuchtungssystem mit einem mobilen Bediengerät. Das mobile Bediengerät ist ausgebildet, um einzelne Leuchten auszuwählen und diese zu steuern.

Das Dokument WO 2008/104927 A2 zeigt eine Steuerung eines Beleuchtungssystems durch ein Bediengerät.

Das Dokument DE 10 2010 038 792 A1 zeigt eine Darstellung der Position eines Betriebsgeräts in einem Beleuchtungssystem.

Aristide, M., Currenti, S., Elber, E. (2010); "ILiving Interaction Design für den Wohnraum der Zukunft" (Master of Advanced Studies in Human Computer Interaction Design) zeigt unter anderem ein System zur Steuerung verschiedener Lampen mithilfe eines mobilen Computers.

DE 10 2011 053 923 A1 zeigt unter anderem ein Verfahren zur drahtlosen Steuerung von Beleuchtungsanlagen mit Hilfe eines Smartphones über das Internet.

Das Dokument WO 2007/072314 A1 zeigt ein System und Verfahren zur Steuerung von Leuchten in einem Beleuchtungssystem.

Der Erfindung liegt die Aufgabe zu Grunde, ein Beleuchtungssystem und ein Verfahren zum Betreiben eines Beleuchtungssystems zu schaffen, welche eine flexible und intuitive Bedienung der Leuchten gewährleisten und gleichzeitig nur geringe Hardwarekosten verursachen.

Die Aufgabe wird erfindungsgemäß durch die Merkmale der unabhängigen Ansprüche gelöst. Vorteilhafte Weiterbildungen sind Gegenstand der hierauf rückbezogenen Unteransprüche.

Ein erfindungsgemäßes Beleuchtungssystem beinhaltet einen mobiles Bediengerät und einer Mehrzahl von Leuchten. Sie Leuchten verfügen jeweils über eine Leuchtensteuerschnittstelle. Jede der Leuchten verfügt über Positionsspeicher, welche jeweils ausgebildet sind, eine Position der jeweiligen Leuchte zu speichern. Das mobile Bediengerät weist eine Positionserfassungseinheit auf, welche ausgebildet ist, eine Position des mobilen Bediengeräts zu erfassen. Das mobile Bediengerät weist eine Anzeigeeinheit und eine Schreibeinheit auf. das Beleuchtungssystem verfügt über ein zentrales Steuergerät, wobei das zentrale Steuergerät über eine Leuchtensteuerschnittstelle verfügt. Das zentrale Steuergerät und die Leuchten sind derart ausgebildet, dass die Steuerung der Leuchten durch das zentrale Steuergerät mittels der Leuchtensteuerschnittstellen des zentralen Steuergeräts und der Leuchtensteuerschnittstelle der Leuchten erfolgt. Das Beleuchtungssystem verfügt über eine Positionsdatenbank, welche ausgebildet ist, eine Position der jeweiligen Leuchte vorzuhalten, wobei die Positionsdatenbank Teil des mobilen Bediengeräts oder des zentralen Steuergeräts ist. Das mobile Bediengerät ist ausgebildet, bei einer erstmaligen Installation einer Leuchte aus einer Mehrzahl von Leuchten
- mittels der Positionserfassungseinheit eine aktuelle Position des mobilen Bediengeräts zu ermitteln, und
- mittels der Schreib-Einheit die erfasste aktuelle Position des mobilen Bediengeräts in die Positionsspeicher der erstmalig installierten Leuchte zu schreiben. Jede der Leuchten ist ausgebildet, bei einer Initialisierung die in den Positionsspeichern gespeicherte Position an die Positionsdatenbank zu übertragen. Das mobile Bediengerät ist zur Steuerung mindestens eines Teils der Leuchten der Mehrzahl der Leuchten weiter dazu ausgelegt ist, eine Position des mobilen Bediengeräts zu erfassen, aus der Positionsdatenbank die jeweilig übertragene Position des Teils der Leuchten auszulesen, und die ausgelesenen Positionen des Teils der Leuchten und die erfasste Position des mobilen Bediengeräts kombiniert mittels der Anzeigeeinheit anzuzeigen,
- eine Auswahl mindestens einer Leuchte aus dem angezeigten Teil der Leuchten und eingegebene Befehle eines Nutzers mittels einer Ein/Ausgabeeinheit des mobilen Bediengeräts zu erfassen, und
wobei d Beleuchtungssystem dzu ausgebildet ist, mittels von dem mobilen Steuergerät übertragener Steuerbefehle gemäß der erfassten Auswahl und der eingegebenen Befehle an das zentrale Steuergerät die mindestens eine ausgewählte Leuchte zu steuern. Eine Steuerung der Leuchten erfolgt mittels des zentralen Steuergeräts gemäß einer Bedienung durch den Nutzer. Somit ist es möglich, eine sehr einfache Bedienung der Leuchten bei gleichzeitig geringem Hardwareaufwand zu erreichen.

Durch das erfindungsgemäße Beleuchtungssystem wird es ermöglicht, bspw. mittels einer auf dem mobilen Gerät - welches als Bediengerät verwendet wird - laufende Software die Positionsdaten der Leuchte(n) mit der eigenen Position zu kombinieren, wobei dem Benutzer als Ergebnis vorzugsweise nur die relevanten, weil umliegenden Leuchten angezeigt werden. Dabei kann der Radius anzuzeigender Leuchten vorzugsweise vom Benutzer einstellbar sein. Auf diese Weise werden eine schnellen Konfiguration der richtigen Leuchte(n) sowie das unmittelbare Erleben dieser Einstellung vor Ort ermöglicht. Denn der Benutzer muss die Leuchten nicht von einem an der Wand montierten Bediengerät aus ansteuern, sondern kann dies direkt vor Ort durchführen, wodurch er sofort die Wirkung seiner Einstellungen - z.B. veränderte Farbtemperatur - nachvollziehen und adjustieren kann. Ferner werden vorzugsweise automatisch die Leuchten in seiner Umgebung in Kombination zu seiner eignen Position angezeigt, wodurch sich das Problem der Ansteuerung der falschen Leuchten oder das Suchen nach der richtigen Leuchte erübrigt.

Da diese Lösung überdies ohne WLAN-Modul (z.B. Bluetooth- Modul) in jeder Leuchte auskommt, kann das erfindungsgemäße Beleuchtungssystem kostengünstiger gegenüber solchen bekannter Lösungen bereitgestellt werden. In den Leuchten sind allenfalls kostengünstige NFC-Chips (s.u.) verbaut, wodurch vorzugsweise lediglich ein zentrales Steuergerät bspw. mit Router nötig ist, der die Verbindung zwischen Bediengerät und Steuergerät bereitstellt. Die vorliegende Erfindung kann ferner zuverlässiger bereitgestellt werden, da eine Funkverbindung nicht über die Leuchten läuft (Störung durch Leuchtengehäuse, Deckenelemente, andere Leuchten, etc. somit vermieden werden können), sondern bspw. ein normales, gängiges WiFi-Netz verwendet werden kann.

Vorzugsweise sind die Positionsspeicher dabei in RFID-Chips eingebettet. Die Schreib-Einheit ist dann ein RFID-Chipleser. So können sehr kostengünstige Standardkomponenten eingesetzt werden. Beispielsweise wird es somit ermöglicht, dass die Leuchten mittels NFC-Chip adressiert werden. Ein mobiles Bediengerät, das bspw. ein Elektriker bei der Montage der Leuchten bzw. des Systems verwendet, übertragt die bspw. per Indoor Positioning ermittelten Positionsdaten mittels NFC an die Leuchte. Unter "Indoor Positioning" ist die Ermittlung der Position im Gebäudeinneren zu verstehen, indem die letzten GPS- und/oder WiFi-Daten mit den Daten verschiedener Sensoren - wie Beschleunigungs-, Drucksensoren und Gyroskopen -kombiniert werden.

Vorteilhafterweise verfügen das Bediengerät und das zentrale Steuergerät jeweils über eine drahtlose Kommunikationsschnittstelle. Das Bediengerät und das zentrale Steuergerät sind dann ausgebildet, um die Steuerung der Leuchten durch das Bediengerät über das zentrale Steuergerät mittels der drahtlosen Kommunikationsschnittstelle durchzuführen. So ist eine weitere Vereinfachung der Bedienung möglich.

Vorzugsweise ist das Bediengerät weiterhin ausgebildet, um auf der Anzeigeeinheit die Positionen lediglich von Leuchten innerhalb eines von dem Nutzer einstellbaren oder vordefinierten Radius um die ermittelte Position des Bediengeräts anzuzeigen. So wird insbesondere bei Installationen mit einer Vielzahl von Leuchten die dem Nutzer dargestellte Informationsfülle reduziert. Hierdurch wird die Bedienung weiter vereinfacht.

Weiterhin ist das Bediengerät besonders vorteilhafterweise derart ausgebildet, dass auf der Anzeigeeinheit lediglich die Position einer (oder eines Teils von) der ermittelten Position des Bediengeräts nächstliegenden Leuchte(n) angezeigt wird. Dies sorgt für eine sehr einfache Auswahlmöglichkeit einer bestimmten Leuchte, welche gesteuert werden soll. Da die Leuchte(n) sich in der Nähe des Bediengerätes befinden, kann der Bediener die Steuerung entsprechend der gegebenen Beleuchtungssituation vor Ort durchführen.

Vorzugsweise ist das Bediengerät weiterhin ausgebildet, um auf der Anzeigeeinheit die Positionen der angezeigten Leuchten und die Position des Bediengeräts in einer Aufsicht-Darstellung entsprechend der jeweiligen Positionen anzuzeigen. So kann eine sehr einfache und intuitive Bedienung durch den Nutzer erfolgen.

Vorzugsweise ist das Bediengerät ausgebildet, um auf der Anzeigeeinheit die Positionen der angezeigten Leuchten und die Position des Bediengeräts in einer Kartendarstellung mit Zusatzinformationen eine jeweilige Umgebung betreffend anzuzeigen. Die Zusatzinformationen werden dabei in der Positionsdatenbank vorgehalten. So ist eine besonders übersichtliche Darstellung möglich.

Vorzugweise sind das Bediengerät und das zentrale Steuergerät weiterhin ausgebildet, um eine Steuerung eines Einschaltzustands und/oder eines Dimmzustands und/oder einer Farbtemperatur und/oder eines zeitlichen Beleuchtungsablaufs der einzelnen Leuchten zu ermöglichen. So ist eine umfangreiche Bedienung lediglich mittels des Bediengeräts möglich. Dies sorgt für eine sehr einfache und intuitive Bedienbarkeit.

Ein erfindungsgemäßes Verfahren dient dem Betreiben eines Beleuchtungssystems mit einem mobilen Bediengerät, und einer Mehrzahl von Leuchten, wobei die Leuchten jeweils über eine Leuchtensteuerschnittstelle verfügen, wobei jede der Leuchten über Positionsspeicher verfügt, welche jeweils ausgebildet sind, eine Position der jeweiligen Leuchte zu speichern. Eine Position des mobilen Bediengeräts wird mittels einer Positionserfassungseinheit des mobilen Bediengerätes erfasst. Das mobile Bediengerät weist eine Anzeigeeinheit und eine Schreibeinheit auf. Das Beleuchtungssystem weist ein zentrales Steuergerät auf, wobei das zentrale Steuergerät über eine Leuchtensteuerschnittstelle verfügt. Das zentrale Steuergerät steuert die Leuchten mittels der Leuchtensteuerschnittstellen des zentralen Steuergeräts und der Leuchtensteuerschnittstelle der Leuchten. Das Beleuchtungssystem verfügt über eine Positionsdatenbank, in welcher eine Position der jeweiligen Leuchten vorgehalten wird. Das mobile Bediengerät erfasst bei einer erstmaligen Installation einer Leuchte aus einer Mehrzahl von Leuchten eine aktuelle Position des mobilen Bediengeräts, und schreibt mittels der Schreib-Einheit die erfasste aktuelle Position des mobilen Bediengeräts in die Positionsspeicher der erstmalig installierten Leuchte. Jede der Leuchten überträgt bei einer Initialisierung der jeweiligen Leuchte die in den Positionsspeichern der Leuchte gespeicherte Position an die Positionsdatenbank. Das mobile Bediengerät erfasst zur Steuerung mindestens eines Teils der Leuchten der Mehrzahl der Leuchten eine Position des mobilen Bediengeräts, liest aus der Positionsdatenbank die jeweilig übertragene Position des Teils der Leuchten aus, und zeigt die ausgelesenen Positionen des Teils der Leuchten und die erfasste Position des mobilen Bediengeräts kombiniert mittels der Anzeigeeinheit an. Weiterhin werden eine Auswahl mindestens einer Leuchte aus dem angezeigten Teil der Leuchten und eingegebene Befehle eines Nutzers mittels einer Ein/Ausgabeeinheit des mobilen Bediengeräts erfasst. Mittels von dem mobilen Steuergerät übertragener Steuerbefehle gemäß der erfassten Auswahl und der eingegebenen Befehle an das zentrale Steuergerät wird die mindestens eine ausgewählte Leuchte von dem Beleuchtungssystem gesteuert. Eine sehr einfache und intuitive Bedienung bei geringen Hardwarekosten ist so möglich.

Nachfolgend wird die Erfindung anhand der Zeichnungen, in der ein vorteilhaftes Ausführungsbeispiel der Erfindung dargestellt ist, beispielhaft beschrieben. In den Zeichnungen zeigen:
- Fig. 1: ein erstes Ausführungsbeispiel des erfindungsgemäßen Beleuchtungssystems;
- Fig. 2: eine erste Detailansicht des Ausführungsbeispiels des erfindungsgemäßen Beleuchtungssystems in einem Blockdiagramm;
- Fig. 3: eine zweite Detailansicht des Ausführungsbeispiels des erfindungsgemäßen Beleuchtungssystems in einem Blockdiagramm;
- Fig. 4: eine dritte Detailansicht des Ausführungsbeispiels des erfindungsgemäßen Beleuchtungssystems in einem Blockdiagramm;
- Fig. 5: eine erste Teilansicht eines Ausführungsbeispiels des erfindungsgemäßen Verfahrens in einem Flussdiagramm, und
- Fig. 6: einen zweiten Teil des Ausführungsbeispiels des erfindungsgemäßen Verfahrens in einem Flussdiagramm.

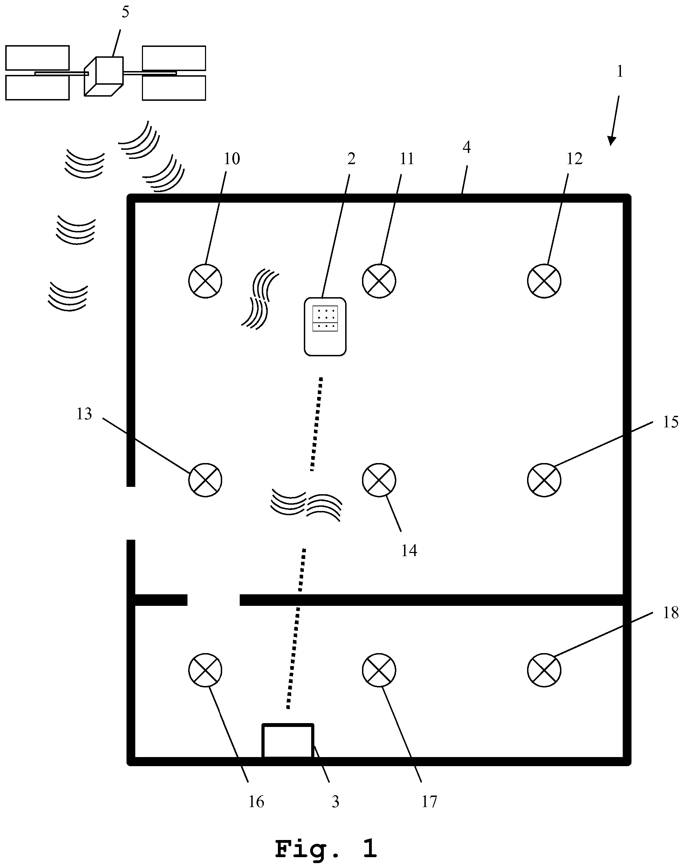

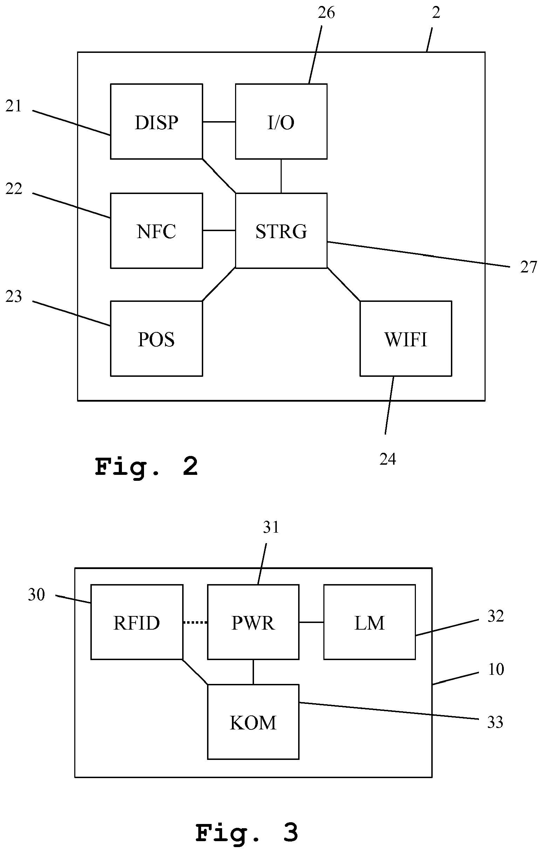

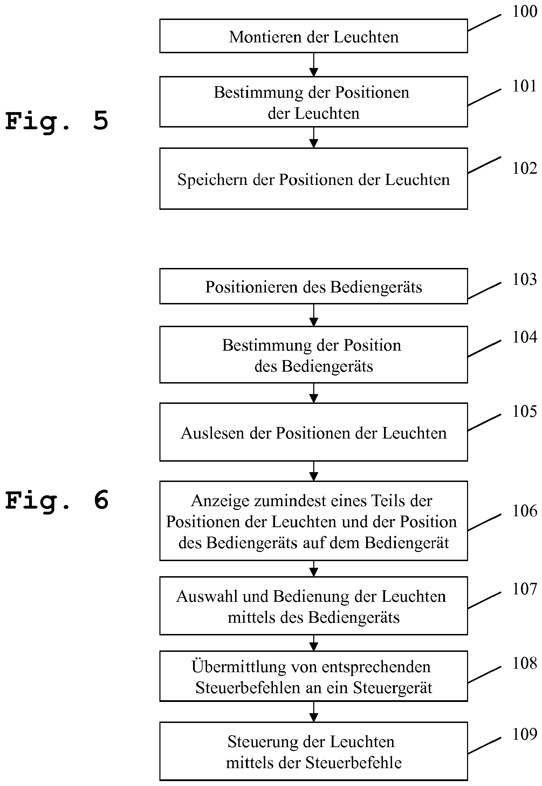

Zunächst wird anhand der Fig. 1 die zu Grunde liegende Problematik und der generelle Aufbau eines Ausführungsbeispiels des erfindungsgemäßen Beleuchtungssystems dargestellt. Anhand von Fig. 2 - Fig. 4 wird anschließend auf den detaillierten Aufbau des Ausführungsbeispiels des erfindungsgemäßen Beleuchtungssystems eingegangen. Abschließend wird anhand von Fig. 5 - Fig. 6 auf die Funktionsweise eines Ausführungsbeispiels des erfindungsgemäßen Verfahrens zum Betreiben eines Beleuchtungssystems eingegangen. Identische Elemente wurden in ähnlichen Abbildungen zum Teil nicht wiederholt dargestellt und beschrieben.

In Fig. 1 ist ein Ausführungsbeispiel des erfindungsgemäßen Beleuchtungssystems 1 dargestellt. Das Beleuchtungssystem beinhaltet ein Bediengerät 2, ein zentrales Steuergerät 3 und eine Mehrzahl von Leuchten 10 - 18. In diesem Fall ist das Beleuchtungssystem 1 in einem Gebäude 4 installiert. Exemplarisch ist weiterhin ein GPS-Satellit 5 dargestellt, um zu verdeutlichen, dass außerhalb des Gebäudes 4 ein uneingeschränkter GPS-Empfang möglich ist, während innerhalb des Gebäudes 4 ein GPS-Empfang nicht oder nur eingeschränkt möglich ist.

Das Bediengerät 2 ist dabei vorzugsweise über eine drahtlose Kommunikationsschnittstelle mit dem zentralen Steuergerät 3 verbunden. Beispielsweise wird hierfür WLAN oder Bluetooth eingesetzt. Jede der Leuchten 10 - 18 verfügt dabei vorzugsweise über einen Positionsspeicher, welcher z.B. in einem RFID-Chip integriert ist. In dem Positionsspeicher können Informationen zu der aktuellen Position der jeweiligen Leuchte 10 - 18 gespeichert werden. Das Bediengerät 2 verfügt vorzugsweise über eine Schreib-Einheit, beispielsweise einen RFID-Chip-Schreiber, um eine Position der jeweiligen Leuchten 10 - 18 in dem Positionsspeicher zu speichern.

Weiterhin verfügt das Bediengerät 2 über eine Positionserfassungseinheit, welche die Position des Bediengeräts 2 erfasst. Hierzu kann auf GPS-Signale zurückgegriffen werden. Aufgrund der unzuverlässigen Verfügbarkeit von GPS-Signalen im Inneren von Gebäuden, kann die Positionserfassungseinheit zusätzlich über weitere Sensoren zur Bestimmung der exakten Position bspw. mittels "Indoor Positioning" verfügen. Beispielsweise kann die Positionserfassungseinheit ein Gyroskop zur relativen Bestimmung der Position beinhalten. Auch kann die Positionserfassungseinheit beispielsweise auf Daten aus einem Funkkommunikationsnetzwerk, wie z.B. Informationen über Basisstationen eines GSM-Netzwerks verfügen. Alternativ ist auch eine Nutzung von WLAN-Netzen zur Positionsbestimmung denkbar. Auch eine Kombination mehrerer dieser Positionsbestimmungsmöglichkeiten ist denkbar.

Das Beleuchtungssystem 1 verfügt weiterhin vorzugsweise über eine Positionsdatenbank, in welcher die Positionen der Leuchten und optional Zusatzinformationen gespeichert sind. Das Bediengerät 2 ist ausgebildet, um die Positionen der Leuchten aus der Positionsdatenbank auszulesen.

Bei einem Initialisierungsvorgang einer Leuchte wird das Bediengerät 2 in die Nähe der entsprechenden Leuchte gebracht und die von dem Bediengerät 2 ermittelte Position in dem Positionsspeicher der Leuchte gespeichert. Die Leuchte gibt die Position an die Positionsdatenbank weiter, welche sie speichert; vorzugsweise in Form eines Anlagenbildes. Somit kann die Leuchte auf eine aufwendige WLAN-Schnittstelle und eine eigene Positionserfassung verzichten.

Das Bediengerät 2 kann die Positionsdaten der Leuchten bzw. des Anlagenbildes von der Positionsdatenbank abrufen und verfügt somit über die Position der Leuchten 10 - 18 als auch über die eigene Position, welche somit kombiniert bereitgestellt werden können. Vorzugsweise auf einer Anzeigeeinheit werden diese Informationen einem Nutzer kombiniert angezeigt. Insbesondere bietet sich hier eine Darstellung in Aufsicht an. D.h. Die Positionen der Leuchten 10 - 18 und die Position des Bediengeräts 2 werden in einer verkleinerten Abbildung in ihrer jeweiligen Position in einer Aufsicht dargestellt. Der Nutzer kann nun durch Auswählen einzelner oder mehrerer Leuchten 10 - 18 einen Bedienvorgang auslösen.

Insbesondere ist eine Einstellung des Schaltzustands, des Dimmzustands, der Farbtemperatur und eines Beleuchtungsablaufs möglich. Auch weitere Bedienvorgänge sind denkbar. Insbesondere ist darüber hinaus eine Kartendarstellung der Positionen der Leuchten 10 - 18 und des Bediengeräts 2 mit Zusatzinformationen - bspw. die gegenwärtige Umgebung betreffend - denkbar. So könnte z.B. ein Grundriss oder ein Ausschnitt (Raum, Umgebung des Bediengerätes innerhalb eines vordefinierten Radius um das Bediengerät, etc.) des Gebäudes 4 eine derartige Zusatzinformation darstellen. Diese Zusatzinformation kann das Bediengerät 2 ebenfalls aus der Positionsdatenbank entnehmen.

Von dem Benutzer durchgeführte Bedienvorgänge werden anschließend über eine drahtlose Kommunikationsschnittstelle zu dem zentralen Steuergerät 3 übertragen, welches mit den Leuchten 10 - 18 (vorzugsweise direkt mittels DALI) verbunden ist und den tatsächlichen Steuervorgang durchführt.

In Fig. 2 ist eine beispielhafte Detailansicht des Bediengeräts 2 aus Fig. 1 in einem Blockschaltbild dargestellt. Das Bediengerät 2 verfügt über eine Anzeigeeinheit 21, eine Schreib-Einheit 22, eine Positionserfassungseinheit 23, eine drahtlose Kommunikationsschnittstelle 24 und eine Eingabe-Ausgabe-Einheit 26. Sämtliche dieser Einheiten 21 - 26 sind darüber hinaus vorzugsweise mit einer zentralen Steuereinrichtung 27 verbunden. Darüber hinaus ist die Anzeigeeinheit 21 vorzugsweise mit der Eingabe-Ausgabe-Einheit 26 verbunden. Die Steuereinheit 27 ist dabei vorzugsweise ausgebildet, um sämtliche übrige Einheiten zu steuern.

Mittels der Eingabe-Ausgabe-Einheit 26 wird auf der Anzeigeeinheit 21 eine kombinierte Darstellung der Positionen der Leuchten 10 - 18 aus Fig. 1 und der des Bediengeräts 2 erzeugt bzw. durchgeführt. Die Eingabe-Ausgabe-Einheit 26 ist dabei für die Darstellung des Inhalts der Anzeigeeinheit 21 verantwortlich. Die Eingabe-Ausgabe-Einheit 26 verarbeitet darüber hinaus vorzugsweise Eingaben des Nutzers und übermittelt sie an die Steuereinrichtung 27. So erfasst Sie z.B. über einen berührungsempfindlichen Bildschirm der Anzeigeeinheit 21 eingegebene Befehle des Nutzers und überträgt diese an die Steuereinrichtung 27. Die Schreib-Einheit 22 ist beispielsweise ein RFID-Chip-Schreiber. Jedoch können auch andere Nahfeldkommunikationsstandards eingesetzt werden. Die Schreib-Einheit 22 dient dazu, in die Positionsspeicher der Leuchten 10 - 18 die Positionen der Leuchten 10 - 18 zu speichern. Die Positionserfassungseinheit 23 dient der Ermittlung der Position des Bediengeräts 2 und damit der Position einer gerade initialisierten Leuchte. Es ermittelt die exakte Position des Bediengeräts 2 basierend auf GPS und/oder WLAN-Signalen und/oder Signalen von Mobilkommunikationsnetzen und/oder Signalen eines integrierten Magnetometers und/oder Signalen eines integrierten Gyroskops und/oder Indoor Positioning. Basierend auf diesen zahlreichen optional zur Verfügung stehenden Informationsquellen bestimmt die Positionserfassungseinheit 23 eine endgültige Position des Bediengeräts 2. Die drahtlose Kommunikationsschnittstelle 24 dient dabei der Kommunikation mit dem zentralen Steuergerät 3 aus Fig. 1.

In Fig. 3 ist eine zweite Detailansicht des Ausführungsbeispiels des erfindungsgemäßen Beleuchtungssystems 1 gezeigt. Hier ist eine exemplarische Leuchte 10 in einem Blockschaltbild dargestellt. Die Leuchte 10 beinhaltet vorzugsweise einen Positionsspeicher 30, welcher hier in ein RFID-Chip integriert ist. Weiterhin beinhaltet die Leuchte 10 vorzugsweise eine Stromversorgung 31, ein Leuchtmittel 32 und eine Kommunikationsschnittstelle 33. In dem Positionsspeicher 30 sind dabei Informationen zu der aktuellen Position der Leuchte 10 gespeichert bzw. speicherbar. Der Positionsspeicher 30 ist optional mit der Stromversorgung 31 verbunden und wird optional von der Stromversorgung 31 mit Strom versorgt. Darüber hinaus ist der Positionsspeicher 30 vorzugsweise mit der Kommunikationsschnittstelle 33 verbunden. Die Stromversorgung 31 ist weiterhin vorzugsweise mit der Kommunikationsschnittstelle 33 verbunden, und versorgt diese mit Strom. Die Stromversorgung kann in der Leuchte integriert sein; alternativ kann die Leuchte auch über eine externe Stromquelle bzw. Stromzufuhr versorgt werden. Die Kommunikationsschnittstelle 33 dient der Kommunikation mit dem zentralen Steuergerät 3 aus Fig. 1. Bei der Kommunikationsschnittstelle 33 handelt es sich beispielsweise um ein Bus-System, wie z.B. DALI. Alternativ kann die Kommunikationsschnittstelle 33 auch drahtlos ausgebildet sein. Die Kommunikationsschnittstelle 33 dient dabei einerseits der Steuerung des Leuchtmittels 32 durch das zentrale Steuergerät 3. Andererseits wird mittels der Kommunikationsschnittstelle 33 die Position(en) der Leuchte(n) 10 - 18, welche bei der Initialisierung von dem Bediengerät 2 ermittelt wurde(n), an die Positionsdatenbank übertragen.

Das Leuchtmittel 32 ist weiterhin mit der Stromversorgung 31 verbunden und wird von der Stromversorgung 31 mit Strom versorgt. Darüber hinaus erfolgt eine Einstellung des von dem Leuchtmittel 32 abzugebenden Lichts durch die Stromversorgung 31. Diese empfängt mittels der Kommunikationsschnittstelle 33 Steuersignale und setzt sie in einer geänderten Ansteuerung des Leuchtmittels 32 um. So ist die Stromversorgung 31 ausgebildet, um den Schaltzustand und/oder die Farbtemperatur und/oder den Dimmzustand und/oder Beleuchtungsabläufe, etc. einzustellen.

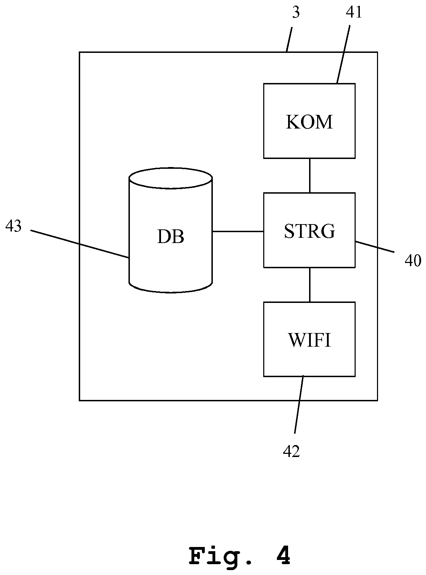

In Fig. 4 ist eine dritte Detailansicht des Ausführungsbeispiels des erfindungsgemäßen Beleuchtungssystems 1 gezeigt. Hier ist in einem Blockschaltbild das zentrale Steuergerät 3 aus Fig. 1 gezeigt. Das zentrale Steuergerät 3 beinhaltet vorzugsweise eine Steuereinheit 40, eine Kommunikationsschnittstelle 41, eine drahtlose Kommunikationsschnittstelle 42 und eine Positionsdatenbank 43.

Die Steuereinrichtung 40 ist dabei vorzugsweise ausgebildet, um die übrigen Einrichtungen 41, 42 zu steuern. Über die drahtlose Kommunikationsschnittstelle 42 empfängt das zentrale Steuergerät 3 vorzugsweise Bedieninformationen von dem Bediengerät 2. Diese werden vorzugsweise an die Steuereinrichtung 40 übertragen und verarbeitet. Mittels der Kommunikationsschnittstelle 41 werden vorzugsweise Steuerbefehle an die Leuchten 10 - 18 aus Fig. 1 übermittelt. Dabei können vorzugsweise Schaltzustände, Dimmzustände, Farbtemperaturen und/oder Beleuchtungsabläufe der Leuchten 10 - 18 gesteuert werden.

Die Positionsdatenbank hält dabei die Positionen der Leuchten 10 - 18 vor, welche bspw. von dem Bediengerät 2 ermittelt und von der jeweiligen Leuchte 10 - 18 an die Positionsdatenbank 43 übertragen wurden. Zusätzlich kann sie Zusatzinformationen vorhalten, welche von dem Bediengerät bei Bedarf abgerufen werden können. Z.B. können dies Karteninformationen hinsichtlich des Raums, in welchem das Beleuchtungssystem installiert ist, sein. Die Positionsdaten der Leuchten könne bspw. in Form eines Positionsprofils oder Anlagenabbildes in der Positionsdatenbank gespeichert werden.

In Fig. 5 ist ein erster Teil eines Ausführungsbeispiels des erfindungsgemäßen Verfahrens in einem Flussdiagramm dargestellt. In einem ersten Schritt 100 werden die Leuchten z.B. von einem Elektriker an ihren jeweiligen Positionen montiert. Mittels eines Bediengeräts, z.B. des Bediengeräts 2 aus Fig. 1, wird die Position der Leuchten 10 - 18 erfasst. Dies erfolgt in einem zweiten Schritt 101. In einem dritten Schritt 102 werden die ermittelten Positionen der Leuchten vorzugsweise in den jeweiligen Positionsspeichern der Leuchten abgespeichert und an eine Positionsdatenbank weitergeleitet und von dieser ebenfalls gespeichert; vorzugsweise in Form eines Positionsprofils (bspw. eines Anlagenabbildes). Somit verfügen die Leuchten und die Positionsdatenbank nun über die jeweiligen Positionen der Leuchten. Der in Fig. 5 dargestellte Ablauf entspricht dem Ablauf bei einer erstmaligen Installation des Beleuchtungssystems oder einer Leuchte. Er wird lediglich bei Positionsänderung oder Hinzufügung einer oder mehrerer der Leuchten wiederholt.

In Fig. 6 ist ein zweiter Teil des Ausführungsbeispiels des erfindungsgemäßen Verfahrens in einem Flussdiagramm dargestellt. Der hier dargestellte Ablauf entspricht dem Ablauf bei einer von einem Nutzer gewünschten Änderung eines Beleuchtungszustands. In einem ersten Schritt 103 wird ein Bediengerät, z.B. das Bediengerät 2 aus Fig. 1, in der Nähe anzusteuernder Leuchten positioniert. In einem zweiten Schritt 104 wird die Position des Bediengeräts bestimmt. Dabei wird z.B. auf GPS, WLAN-Signale, ein Gyroskop, etc. zugegriffen. In einem dritten Schritt 105 wird die Position von Leuchten, welche sich in der Nähe des Bediengeräts befinden, oder das gesamte oder ein Teil des Anlagenabbildes/Positionsprofils aus der Positionsdatenbank ausgelesen. Unter "in der Nähe" wird erfindungsgemäß in diesem Zusammenhang verstanden, dass Leuchten ausgewählt werden, welche sich in einem ausgewählten oder vordefinierten Bereich bzgl. oder um das Bediengerät 2 herum befinden; bspw. innerhalb eines bestimmten Radius um das Bediengerät 2 herum.

In einem vierten Schritt 106 werden einem Nutzer die Positionen (eines Teils) der Leuchten und die Position des Bediengeräts auf einer Anzeige des Bediengeräts kombiniert dargestellt. Dabei können sämtliche detektierte Leuchten angezeigt werden. Alternativ können lediglich innerhalb eines von einem Nutzer bestimmten oder vorbestimmten Bereichs/Radius um die Position des Bediengeräts befindliche Leuchten angezeigt werden. Darüber hinaus ist auch eine Einschränkung auf die dem Bediengerät nächstliegenden Leuchte(n) möglich. Darüber hinaus ist auch eine Einschränkung auf einzelne Bereiche (bspw. Räume) innerhalb des Gebäudes denkbar. Zwischen diesen Optionen kann der Nutzer vorzugsweise aktiv wählen. In einem fünften Schritt 107 erfolgt eine Auswahl und Bedienung der Leuchten mittels des Bediengeräts durch den Nutzer. In einem sechsten Schritt 108 werden entsprechende Steuerbefehle von dem Bediengerät an ein zentrales Steuergerät übertragen. In einem siebten Schritt 109 erfolgt eine Steuerung der Leuchten mittels der Steuerbefehle. In einer vorteilhaften Weiterbildung führt das zentrale Steuergerät eine Übersetzung der Steuerbefehle des Bediengeräts in Steuerbefehle für die Leuchten durch.

Mittels der erfindungsgemäßen und bevorzugten Ausführungsformen kann ein mobiles Gerät, das zur Adressierung benutzt wird, gleichzeitig als Bediengerät 2 dienen. Es kommuniziert vorzugsweise drahtlos mit dem zentralen Steuergerät 3 bspw. über einen Router, wodurch eine kostengünstige ortsabhängige Leuchtenkonfiguration umgesetzt werden kann. Ferner kann das zentrale Steuergerät 3 bspw. über einen Router (z.B. mittels WLAN-Signal) die Position der Leuchten (bspw. das Anlagenabbild) an das mobile Bediengerät 2 übertragen. Das mobile Bediengerät 2 erkennt seine Position bspw. durch Indoor Positioning, wobei bspw. eine Software des Bediengeräts 2 diese beiden Informationen kombiniert, so dass z.B. nur die Leuchten in der Umgebung (bspw. die Leuchte, unter der man gerade steht) angezeigt werden. Der Radius anzuzeigender Leuchten ist vorzugsweise vom Benutzer über das Bediengerät 2 einstellbar.

Die Erfindung ist nicht auf das dargestellte Ausführungsbeispiel beschränkt.

Insbesondere ist keine Einschränkung auf bestimmte Möglichkeiten der Positionserfassung oder bestimmte Kommunikationsstandards zwischen dem Bediengerät und den Leuchten und zwischen dem Bediengerät und dem zentralen Steuergerät und zwischen dem zentralen Steuergerät und den Leuchten Teil der Erfindung.

## Patentansprüche

1. Beleuchtungssystem mit einem mobilen Bediengerät (2), und einer Mehrzahl von Leuchten,
wobei die Leuchten (10 - 18) jeweils über eine Leuchtensteuerschnittstelle (33) verfügen,
wobei jede der Leuchten (10 - 18) über Positionsspeicher (30) verfügt, welche jeweils ausgebildet sind, eine Position der jeweiligen Leuchte (10 - 18) zu speichern,
wobei das mobile Bediengerät (2) eine Positionserfassungseinheit (23) aufweist, welche ausgebildet ist, eine Position des mobilen Bediengeräts (2) zu erfassen, und wobei das mobile Bediengerät (2) eine Anzeigeeinheit (21) und eine Schreibeinheit (22) aufweist;
**dadurch gekennzeichnet,**
**dass** das Beleuchtungssystem
ein zentrales Steuergerät (3) aufweist, wobei das zentrale Steuergerät (3) über eine Leuchtensteuerschnittstelle (41) verfügt,
wobei das zentrale Steuergerät (3) und die Leuchten (10 - 18) derart ausgebildet sind, dass die Steuerung der Leuchten (10 - 18) durch das zentrale Steuergerät (3) mittels der Leuchtensteuerschnittstellen (33, 41) des zentralen Steuergeräts (3) und der Leuchtensteuerschnittstelle der Leuchten (10 - 18) erfolgt,
**dass** das Beleuchtungssystem über eine Positionsdatenbank verfügt, welche ausgebildet ist, eine Position der jeweiligen Leuchte (10 - 18) vorzuhalten, wobei die Positionsdatenbank Teil des mobilen Bediengeräts (2) oder des zentralen Steuergeräts (3) ist,
**dass** das mobile Bediengerät (2) ausgebildet ist, bei einer erstmaligen Installation einer Leuchte (10-18) aus der Mehrzahl von Leuchten (10-18)
- mittels der Positionserfassungseinheit (23) eine aktuelle Position des mobilen Bediengeräts (2) zu ermitteln, und
- mittels der Schreib-Einheit (22) die erfasste aktuelle Position des mobilen Bediengeräts in die Positionsspeicher (30) der erstmalig installierten Leuchte (10 - 18) zu schreiben, und
**dass** jede der Leuchten (10 - 18) ausgebildet ist, bei einer Initialisierung die in den Positionsspeichern (30) gespeicherte Position an die Positionsdatenbank (43) zu übertragen,
wobei das mobile Bediengerät (2) zur Steuerung mindestens eines Teils der Leuchten (10-18) der Mehrzahl der Leuchten (10-18), weiter dazu ausgelegt ist,
eine Position des mobilen Bediengeräts (2) zu erfassen,
aus der Positionsdatenbank die jeweilig übertragene Position des Teils der Leuchten (10-18) auszulesen,
und die ausgelesenen Positionen des Teils der Leuchten (10-18) und die erfasste Position des mobilen Bediengeräts (2) kombiniert mittels der Anzeigeeinheit (21) anzuzeigen, und
- eine Auswahl mindestens einer Leuchte (10-18) aus dem angezeigten Teil der Leuchten (10 - 18) und eingegebene Befehle eines Nutzers mittels einer Ein/Ausgabeeinheit (26) des mobilen Bediengeräts (2) zu erfassen, und
wobei das Beleuchtungssystem dazu ausgebildet ist, mittels von dem mobilen Steuergerät (2) übertragener Steuerbefehle gemäß der erfassten Auswahl und der eingegebenen Befehle an das zentrale Steuergerät (3) die mindestens eine ausgewählte Leuchte (10 - 18) zu steuern.

2. Beleuchtungssystem nach Anspruch 1,
wobei die Positionsspeicher (30) in RFID-Chips eingebettet sind, und
wobei die Schreib-Einheit (22) ein RFID-Chip-Schreiber ist.

3. Beleuchtungssystem nach Anspruch 1 oder 2,
wobei das mobile Bediengerät (2) über eine drahtlose Kommunikationsschnittstelle (24) verfügt,
wobei das zentrale Steuergerät (3) über eine drahtlose Kommunikationsschnittstelle (42) verfügt, und
wobei das mobile Bediengerät (2) und das zentrale Steuergerät (3) derart ausgebildet sind, dass die Steuerung der Leuchten (10 - 18) durch das mobile Bediengerät (2) über das zentrale Steuergerät (3) mittels der drahtlosen Kommunikationsschnittstellen (24, 42) erfolgt.

4. Beleuchtungssystem nach einem der Ansprüche 1 bis 3,
wobei die Leuchtensteuerschnittstellen (33, 41) bevorzugt DALI-Schnittstellen sind.

5. Beleuchtungssystem nach einem der Ansprüche 1 bis 4,
wobei das mobile Bediengerät (2) ausgebildet ist, auf der Anzeigeeinheit (21) die Positionen lediglich von Leuchten (10 - 18) innerhalb eines von einem Nutzer einstellbaren oder vordefinierten Radius um die ermittelte Position des mobilen Bediengeräts (2) anzuzeigen.

6. Beleuchtungssystem nach einem der Ansprüche 1 bis 5,
wobei das mobile Bediengerät (2) ausgebildet ist, auf der Anzeigeeinheit (21) die Positionen lediglich einer oder eines Teils der ermittelten Position des mobilen Bediengeräts (2) nächstliegenden Leuchte(n) (10 - 18) anzuzeigen.

7. Beleuchtungssystem nach einem der Ansprüche 1 bis 6,
wobei das mobile Bediengerät (2) ausgebildet ist, auf der Anzeigeeinheit (21) die ausgelesenen Positionen des Teils der Leuchten (10 - 18) und die erfasste Position des mobilen Bediengeräts (2) kombiniert in einer Aufsicht-Darstellung entsprechend der jeweiligen Positionen anzuzeigen.

8. Beleuchtungssystem nach einem der Ansprüche 1 bis 6,
wobei das mobile Bediengerät (2) ausgebildet ist, auf der Anzeigeeinheit (21) die ausgelesenen Positionen des Teils der Leuchten (10 - 18) und die erfasste Position des mobilen Bediengeräts (2) kombiniert in einer Kartendarstellung mit Zusatzinformationen eine jeweilige Umgebung betreffend, anzuzeigen, und
wobei die Zusatzinformationen die jeweilige Umgebung betreffend in der Positionsdatenbank (43) vorgehalten sind.

9. Verfahren zum Betreiben eines Beleuchtungssystems (1) mit einem mobilen Bediengerät (2), und einer Mehrzahl von Leuchten (10 - 18),
wobei die Leuchten (10 - 18) jeweils über eine Leuchtensteuerschnittstelle (33) verfügen,
wobei jede der Leuchten (10 - 18) über Positionsspeicher (30) verfügt, welche jeweils ausgebildet sind, eine Position der jeweiligen Leuchte (10 - 18) zu speichern,
wobei eine Position des mobilen Bediengeräts (2) mittels einer Positionserfassungseinheit (23) des mobilen Bediengerätes (2) erfasst wird,
wobei das mobile Bediengerät (2) eine Anzeigeeinheit (21) und eine Schreibeinheit (22) aufweist;
**dadurch gekennzeichnet,**
**dass** das Beleuchtungssystem
ein zentrales Steuergerät (3) aufweist, wobei das zentrale Steuergerät (3) über eine Leuchtensteuerschnittstelle (41) verfügt,
wobei das zentrale Steuergerät (3) die Leuchten (10 - 18) mittels der Leuchtensteuerschnittstellen (33, 41) des zentralen Steuergeräts (3) und der Leuchtensteuerschnittstelle der Leuchten (10 - 18) steuert,
**dass** das Beleuchtungssystem über eine Positionsdatenbank (43) verfügt, in welcher eine Position der jeweiligen Leuchten vorgehalten wird,
**dass** von dem mobilen Bediengerät (2) bei einer erstmaligen Installation einer Leuchte (10-18) aus der Mehrzahl von Leuchten (10-18)
- eine aktuelle Position des mobilen Bediengeräts (2) erfasst wird, und
- mittels der Schreib-Einheit (22) die erfasste aktuelle Position des mobilen Bediengeräts in die Positionsspeicher (30) der erstmalig installierten Leuchte (10 - 18) geschrieben wird, und
**dass** von jeder der Leuchten (10 - 18) bei einer Initialisierung der jeweiligen Leuchte (10 - 18) die in den Positionsspeichern der Leuchte (10 - 18) gespeicherte Position an die Positionsdatenbank (43) übertragen wird,
wobei von dem mobilen Bediengerät (2) zur Steuerung mindestens eines Teils der Leuchten (10-18) der Mehrzahl der Leuchten (10-18),
eine Position des mobilen Bediengeräts (2) erfasst wird, und
aus der Positionsdatenbank die jeweilig übertragene Position des Teils der Leuchten (10-18) ausgelesen wird, und
die ausgelesenen Positionen des Teils der Leuchten (10-18) und die erfasste Position des mobilen Bediengeräts (2) kombiniert mittels der Anzeigeeinheit (21) anzeigt wird, und
- eine Auswahl mindestens einer Leuchte (10-18) aus dem angezeigten Teil der Leuchten (10 - 18) und eingegebene Befehle eines Nutzers mittels einer Ein/Ausgabeeinheit (26) des mobilen Bediengeräts (2) erfasst werden, und
wobei von dem Beleuchtungssystem mittels von dem mobilen Steuergerät (2) übertragener Steuerbefehle gemäß der erfassten Auswahl und der eingegebenen Befehle an das zentrale Steuergerät (3), die mindestens eine ausgewählte Leuchte (10 - 18) gesteuert wird.

## Claims

1. Lighting system with a mobile control device (2) and a plurality of luminaires,
wherein the luminaires (10-18) in each case have a luminaire control interface (33),
wherein each of the luminaires (10-18) has a position memory (30) which are in each case designed to store a position of the respective luminaire (10-18),
wherein the mobile control device (2) has a position sensing unit (23) which is designed to detect a position of the mobile control device (2), and
wherein the mobile control device (2) has a display unit (21) and a write unit (22);
**characterized in that**
the lighting system
comprises a central controller (3), wherein the central controller (3) has a luminaire control interface (41),
wherein the central controller (3) and the luminaires (10 - 18) are designed such that control of the luminaires (10 - 18) is effected by the central controller (3) by means of the luminaire control interfaces (33, 41) of the central controller (3) and the luminaire control interface of the luminaires (10 - 18),
the lighting system has a position database which is designed to keep available a position of the respective luminaire (10 - 18), wherein the position database is part of the mobile control device (2) or of the central controller (3),
the mobile control device (2), at the first installation of one luminaire (10 - 18) out of the plurality of lights (10 - 18), is designed
- by means of the position detection unit (23) to determine a current position of the mobile control device (2), and
- by means of the writing unit (22) to write the detected current position of the mobile control device to the position memories (30) of the luminaire (10 - 18) installed for the first time, and
each of the luminaires (10 - 18) is designed, in the case of an initialization, to transfer the position stored in the position memories (30) to the position database (43),
wherein the mobile control device (2), in order to control at least a portion of the luminaires (10-18) of the plurality of luminaires (10 - 18), is further configured to
detect a position of the mobile control device (2),
from the position database to read out the respectively transmitted position of the portion of the lights (10 - 18),
and to display the read-out positions of the portion of the luminaires (10 - 18) and the detected position of the mobile control device (2) combined by means of the display unit (21), and
- to capture a selection of at least one luminaire (10 - 18) from the displayed portion of the luminaires (10 - 18) and commands of a user input by means of an input/output unit (26) of the mobile control device (2), and
wherein the lighting system is designed to use the control commands transmitted by the mobile control device (2) according to the captured selection and the commands input into the central control device (3) in order to control the at least one selected luminaire (10 - 18).

2. Lighting system according to Claim 1,
wherein the position memories (30) are embedded in RFID chips, and
wherein the write unit (22) is an RFID chip writer.

3. Lighting system according to Claims 1 or 2,
wherein the mobile control device (2) has a wireless communication interface (24),
wherein the central controller (3) has a wireless communication interface (42), and
wherein the mobile control device (2) and the central controller (3) are designed such that control of the luminaires (10 - 18) is effected by the mobile control device (2) via the central controller (3) by means of the wireless communication interfaces (24, 42).

4. Lighting system according to any one of Claims 1 to 3,
wherein the luminaire control interfaces (33, 41) are preferably DALI interfaces.

5. Lighting system according to any one of Claims 1 to 4,
wherein the mobile control device (2) is designed to display on the display unit (21) the positions only of luminaires (10 - 18) within a radius, adjustable or predefined by a user, around the determined position of the mobile control device (2).

6. Lighting system according to any one of Claims 1 to 5,
wherein the mobile control device (2) is designed to display on the display unit (21) the positions of only one or of a portion of the luminaire(s) (10 - 18) lying closest to the determined position of the mobile control device (2).

7. Lighting system according to any one of Claims 1 to 6,
wherein the mobile control device (2) is designed to display on the display unit (21) the read-out positions of the portion of the luminaires (10 - 18) and the detected position of the mobile control device (2), doing so in a plan view corresponding to the respective positions.

8. Lighting system according to any of Claims 1 to 6,
wherein the mobile control device (2) is designed to display on the display unit (21) the read-out positions of the portion of the luminaires (10 - 18) and the detected position of the mobile control device (2) combined in a map representation with additional information relating to a respective environment, and
wherein the additional information relating to the respective environment is kept available in the position database (43).

9. Method for operating a lighting system (1) with a mobile control device (2) and a plurality of luminaires (10 - 18),
wherein the luminaires (10-18) in each case have a luminaire control interface (33),
wherein each of the luminaires (10-18) has a position memory (30) which are in each case designed to store a position of the respective luminaire (10-18),
wherein a position of the mobile control device (2) is detected by means of a position detection unit (23) of the mobile control device (2),
wherein the mobile control device (2) has a display unit (21) and a write unit (22);
**characterized in that**
the lighting system
comprises a central controller (3), wherein the central controller (3) has a luminaire control interface (41),
wherein the central control unit (3) controls the luminaires (10 - 18) by means of the luminaire control interfaces (33, 41) of the central controller (3) and the luminaire control interface of the luminaires (10 - 18),
the lighting system has a position database (43) in which a position of the respective luminaires is kept available,
when a luminaire (10 - 18) from the plurality of luminaires (10-18) is installed for the first time, the mobile control device (2)
- detects a current position of the mobile control device (2), and
- by means of the write unit (22) writes the detected current position of the mobile control device to the position memories (30) of the luminaire (10-18) installed for the first time, and
of each of the luminaires (10 - 18) upon initialization of the respective luminaire (10 - 18) the position stored in the position memories of the luminaire (10 - 18) is transmitted to the position database (43),
wherein the mobile control device (2), in order to control at least a portion of the luminaires (10-18) of the plurality of luminaires (10-18),
detects a position of the mobile control device (2), and
from the position database the respectively transmitted position of the portion of the luminaires (10 - 18) is read out, and
the read-out positions of the portion of the luminaires (10 - 18) and the detected position of the mobile control device (2) are combined by means of the display unit (21) and displayed, and
- a selection of at least one luminaire (10-18) from the displayed portion of the luminaires (10 - 18) and commands input by a user by means of an input/output unit (26) of the mobile control device (2) are captured, and
wherein of the lighting system the at least one selected luminaire (10-18) is controlled by means of control commands transmitted by the mobile control device (2) tin accordance with the captured selection and with the commands input into the central controller (3).

## Revendications

1. Système d'éclairage comprenant un appareil de commande mobile (2) et une pluralité de luminaires,
les luminaires (10 - 18) disposant respectivement d'une interface de commande de luminaires (33),
chacun des luminaires (10 - 18) disposant de mémoires de position (30), lesquelles sont respectivement conçues pour enregistrer une position de luminaire (10 - 18) respectif,
l'appareil de commande mobile (2) présentant une unité de détection de position (23), laquelle est conçue pour détecter une position de l'appareil de commande mobile (2), et
l'appareil de commande mobile (2) présentant une unité d'affichage (21) et une unité d'écriture (22) ;
**caractérisé**
**en ce que** le système d'éclairage
présente un appareil de commande central (3), l'appareil de commande central (3) disposant d'une interface de commande de luminaires (41),
l'appareil de commande central (3) et les luminaires (10 - 18) étant conçus de telle façon que la commande des luminaires (10 - 18) par l'appareil de commande central (3) s'effectue au moyen des interfaces de commande de luminaires (33, 41) de l'appareil de commande central (3) et de l'interface de commande de luminaires des luminaires (10 - 18),
**en ce que** le système d'éclairage dispose d'une base de données de positions, laquelle est conçue pour tenir à disposition une position du luminaire (10 - 18) respectif, la base de données de positions faisant partie de l'appareil de commande mobile (2) ou de l'appareil de commande central (3),
**en ce que** l'appareil de commande mobile (2) est conçu pour, lors d'une première installation d'un luminaire (10 - 18) de la pluralité de luminaires (10 - 18),
- déterminer au moyen de l'unité de détection de position (23) une position actuelle de l'appareil de commande mobile (2), et
- écrire au moyen de l'unité d'écriture (22) la position actuelle détectée de l'appareil de commande mobile dans la mémoire de position (30) du luminaire (10 - 18) installé pour la première fois, et
**en ce que** chacun des luminaires (10 - 18) est conçu pour, lors d'une initialisation, transmettre la position enregistrée dans les mémoires de position (30) à la base de données de positions (43),
l'appareil de commande mobile (2) étant, pour la commande d'au moins une partie des luminaires (10 - 18) de la pluralité de luminaires (10 - 18), en outre conçu pour
détecter une position de l'appareil de commande mobile (2),
lire depuis la base de données de positions la position respectivement transmise de la partie des luminaires (10 - 18)
et afficher au moyen de l'unité d'affichage (21) les positions lues de la partie des luminaires (10 - 18) et la position détectée de l'appareil de commande mobile (2) combinées, et
- détecter au moyen d'une unité d'entrée/sortie (26) de l'appareil de commande mobile (2) une sélection d'au moins un luminaire (10 - 18) de la partie de luminaires (10 - 18) affichée et de commandes saisies d'un utilisateur, et
le système d'éclairage étant conçu pour, au moyen des commandes transmises par l'appareil de commande mobile (2) à l'appareil de commande central (3) conformément à la sélection détectée et aux commandes saisies, commander l'au moins un luminaire (10 - 18) sélectionné.

2. Système d'éclairage selon la revendication 1,
les mémoires de position (30) étant intégrées dans des puces RFID, et
l'unité d'écriture (22) étant un dispositif d'écriture de puces RFID.

3. Système d'éclairage selon la revendication 1 ou 2,
l'appareil de commande mobile (2) disposant d'une interface de communication sans fil (24),
l'appareil de commande central (3) disposant d'une interface de communication sans fil (42), et
l'appareil de commande mobile (2) et l'appareil de commande central (3) étant conçus de telle façon que la commande des luminaires (10 - 18) par l'appareil de commande mobile (2) s'effectue à travers l'appareil de commande central (3) au moyen des interfaces de communication sans fil (24, 42),

4. Système d'éclairage selon l'une quelconque des revendications 1 à 3,
les interfaces de commande de luminaires (33, 41) étant de préférence des interfaces DALI.

5. Système d'éclairage selon l'une quelconque des revendications 1 à 4,
l'appareil de commande mobile (2) étant conçu pour afficher sur l'unité d'affichage (21) uniquement les positions de luminaires (10 - 18) dans un rayon réglable ou prédéfini par un utilisateur autour de la position déterminée de l'appareil de commande mobile (2).

6. Système d'éclairage selon l'une quelconque des revendications 1 à 5,
l'appareil de commande mobile (2) étant conçu pour afficher sur l'unité d'affichage (21) uniquement les positions d'un luminaire (10 - 18) ou d'une partie des luminaires (10 - 18) le(s) plus proche(s) de l'appareil de commande mobile (2).

7. Système d'éclairage selon l'une quelconque des revendications 1 à 6,
l'appareil de commande mobile (2) étant conçu pour afficher sur l'unité d'affichage (21) les positions lues de la partie des luminaires (10 - 18) et la position détectée de l'appareil de commande mobile (2) combinées dans une vue de dessus en fonction des positions respectives.

8. Système d'éclairage selon l'une quelconque des revendications 1 à 6,
l'appareil de commande mobile (2) étant conçu pour afficher sur l'unité d'affichage (21) les positions lues de la partie des luminaires (10 - 18) et la position détectée de l'appareil de commande mobile (2) combinées dans une représentation cartographique comprenant des informations complémentaires concernant un environnement respectif, et
les informations complémentaires concernant l'environnement respectif étant tenues à disposition dans la base de données de positions (43).

9. Procédé pour faire fonctionner un système d'éclairage (1) comprenant un appareil de commande mobile (2) et une pluralité de luminaires (10 - 18),
les luminaires (10 - 18) disposant respectivement d'une interface de commande de luminaires (33),
chacun des luminaires (10 - 18) disposant de mémoires de position (30), lesquelles sont respectivement conçues pour enregistrer une position de luminaire (10 - 18) respectif,
la position de l'appareil de commande mobile (2) étant détectée au moyen d'une unité de détection de positions (23) de l'appareil de commande mobile (2),
l'appareil de commande mobile (2) présentant une unité d'affichage (21) et une unité d'écriture (22) ;
**caractérisé**
**en ce que** le système d'éclairage
présente un appareil de commande central (3), l'appareil de commande central (3) disposant d'une interface de commande de luminaires (41),
l'appareil de commande central (2) commandant les luminaires (10 - 18) au moyen des interfaces de commande de luminaires (33, 41) de l'appareil de commande central (3) et de l'interface de commande de luminaires des luminaires (10 - 18),
**en ce que** le système d'éclairage dispose d'une base de données de positions (43), dans laquelle une position des luminaires respectifs est tenue à disposition,
**en ce que,** lors d'une première installation d'un luminaire (10 - 18) de la pluralité de luminaires (10 - 18), l'appareil de commande mobile (2)
- détecte une position actuelle de l'appareil de commande mobile (2),
- écrit au moyen de l'unité d'écriture (22) la position actuelle détectée de l'appareil de commande mobile dans la mémoire de positions (30) du luminaire (10 - 18) installé pour la première fois, et
**en ce que** chacun des luminaires (10 - 18), lors d'une initialisation du luminaire (10 - 18) respectif, transmet la position enregistrée dans les mémoires de positions du luminaire (10 - 18) à la base de données de positions (43),
pour la commande d'au moins une partie des luminaires (10 - 18) de la pluralité de luminaires (10 - 18), l'appareil de commande mobile (2)
détectant une position de l'appareil de commande mobile (2),
lisant de la base de données de positions la position respectivement transmise de la partie des luminaires (10 - 18)
et affichant au moyen de l'unité d'affichage (21) les positions lues de la partie des luminaires (10 - 18) et la position détectée de l'appareil de commande mobile (2) combinées, et
- une sélection d'au moins un luminaire (10 - 18) de la partie de luminaires (10
- 18) affichée et de commandes saisies d'un utilisateur étant détectées au moyen d'une unité d'entrée/sortie (26) de l'appareil de commande mobile (2), et
le système d'éclairage, au moyen des commandes transmises par l'appareil de commande mobile (2) à l'appareil de commande central (3) conformément à la sélection détectée et aux commandes saisies, commandant l'au moins un luminaire (10 - 18) sélectionné.
